# EUROPEAN PATENT SPECIFICATION

(11) **EP 2 338 666 B1**
(45) Date of publication and mention of the grant of the patent: **03.07.2013**
(21) Application number: 09400063.5
(22) Date of filing: 22.12.2009
(51) Int. Cl.: B29C 70/08, B29C 70/54, B29B 11/16

(54) **Semi-finished product and preform used to manufacture a part made form composite material**
Halbzeug und Vorform, die zur Fertigung eines Teils verwendet werden, das aus Verbundmaterial hergestellt wird
Produit semi-fini et préforme utilisée pour fabriquer une pièce fabriquée à partir de matériau composite

(43) Date of publication of application: 29.06.2011
(73) Proprietor: Eurocopter Deutschland GmbH, 86609 Donauwörth (DE)
(72) Inventor: Weimer, Christian, 81543 München (DE); Bätge, Nikolaus, 82041 Deisenhofen (DE); Parlevliet, Patricia, 81667 München (DE)
(74) Representative: Pouillot, Laurent Pierre Paul

(56) References cited:
- EP-A2- 0 361 796
- WO-A1-99/44810
- WO-A1-2007/135418
- US-A- 5 344 687

## Description

This invention pertains to the general technical field of composite material part manufacture, including, for example, reinforcements parts made of matrix impregnated fibres. For example, such parts may be obtained by molding reinforced composite material strengthened around a molding core. In addition, this composite material, produced using a semi-finished product or preform that is yet to be impregnated, may include preimpregnated layers, also known as "Prepreg". Targeted infusion/injection of a dry preform is then completed before a final solidification operation is performed on the part thus produced. By way of example, such parts are for use in the aviation industry, aerospace structures, automotive industry or wind-energy industry.

In the rest of the text, "impregnation matrix" designates any type of polymer resin or polymer resin mixture presenting low viscosity and that is solidified by being polymerized.

The term "fibre" or "fiber" is used below to designate any type of structural fibre such as carbon fibre, glass fibre, aramid fibre, polyethylene (polyolifine), basalt or natural fibre.

Known molding methods are not described in detail herein.

More specifically, this invention concerns the manufacture of semi-finished products such as dry preforms with at least one laminar reinforcing layer; said semi-finished products or preforms are impregnated using an impregnation matrix during injection or infusion operations. The choice of material used to make these preforms, or any material associated with them, influences the mechanical and physical properties of future composite parts.

To modify the hardness of composite parts or to ensure their fire resistance, specific resin component mixtures or compounds should be prepared prior to the reinforcing layer (for example, layers of carbon fibers) impregnation operation. These mixes provide the composite parts with the required mechanical and physical properties, and, without them it would be impossible to qualify said parts for various applications.

Integrating these mixes or compounds in a matrix or in an impregnation resin increases its viscosity and leads to poor infiltration of reinforcing layers.

Impregnation matrices that integrate these specific mixes cannot, therefore, be used as infusion matrices in the vacuum injection processes or in RTM processes (Resin Transfer Molding). This is why the components that provide the required mechanical and physical properties are integrated in the preform rather than in an impregnation resin.

A proposal was made to process hardness-related properties and fire resistance-related properties in a different manner and to integrate the corresponding components in fiber-based architectures. These components are generally found in the form of a fiber-based product or a powder that should be added to the preform.

The drawback of such systems is that the powder is only locally integrated in the preform's fiber architecture.

The drawback of integrating a component in the form of fibers is that it is very difficult to accurately define the areas with modified and optimized mechanical or functional properties.

A further drawback of integrating a component in its powder form is that it is sensitive to the so-called wash-out effect (undesired concentration variation through the composite). There is a risk that the powder particles may be entrained with the impregnation matrix and may accumulate in inappropriate areas. As a result, it is not possible to achieve homogeneous distribution of the powder in the preform.

Another drawback is that forming / draping of such preforms usually requires heat

Another drawback of current draping/ preforming processes is that the fibre architecture cannot be controlled/ monitored during the forming process.

There are also examples of using a thermoplastic surface, in the form of a film, placed on heat-solidified polymer parts that should be bound together (e.g. document EP 1 423 256). The parts are placed in mutual contact via their thermoplastic surface. The bond between the two parts is then obtained by fusion, followed by solidification of the thermoplastic surfaces. However, using a thermoplastic film in this way - as a means of binding at the interface of two parts - does not necessarily optimize the mechanical and physical properties of a composite part.

The document US 5344687 A discloses binded, moldable and structurally reinforced thermoplastic-fabric composite construction materials comprising a structurally reinforced multilayer binded together in a binding process. A barrier fabric layer, and/or a decorative layer, may also be included in order to produce or vary decorative, and/or other effects. The structurally reinforced multilayer is made from a thermoplastic resin system and at least one fabric layer containing reinforcing fibers. Reinforcing fibers are introduced into components of the structurally reinforced multilayer, within the fabric layers, and may also be comingled with or layered into the thermoplastic resin system before addition to the fabric.

The document EP 0361796 A2 discloses a method of providing a formable composite material comprising providing a reinforcing material having a plurality of superimposed layers, each layer consisting of a plurality of unidirectional non-woven yarns or threads laid side-by-side, the yarns or threads in at least some of the different layers extending in different directions, said layers being stitched together, and before said stitching incorporating in or with the reinforcing material a matrix material.

The document WO 9944810 A1 discloses a fibrous structure arrangement for a preform of a component made of fibrous composite material. The structure arrangement has at least one structural layer comprised of fiber bundles which are each made of reinforcing fibers and which are arranged in the same direction and in an adjacent manner. The structure arrangement also has at least one layer comprised of a flat, hot-melt adhesive mat, whereby the layers are sewn to one another in a stacked manner.

Consequently, this invention aims to provide an alternative semi-finished product for manufacturing a composite part.

The objectives of the invention are met by a semi-finished product for manufacturing a composite part according to independent claim 1.

In an embodiment of a semi-finished product in accordance with the invention, the semi-finished product is shaped to a preform tool/mould, with the help of at least the stitches.

In one embodiment of a semi-finished product in accordance with the invention, the thermoplastic layer is a non-woven layer such as a veil.

In an embodiment of a semi-finished product in accordance with the invention, the thermoplastic layer is inserted between two reinforcing layers.

In one embodiment of a semi-finished product in accordance with the invention, the thermoplastic layer is positioned on an outer side of an external reinforcing layer of said semi-finished product.

In one embodiment of a semi-finished product in accordance with the invention, the thermoplastic layer includes a least one thermoplastic sheet.

In another embodiment of a semi-finished product in accordance with the invention, the thermoplastic layer includes an assembly of several thermoplastic sheets which are for instance stitched together.

As an example, at least one of the thermoplastic sheets has different structural characteristics and/or properties than the other thermoplastic sheets.

The objectives of the invention are also met using a preform for molding a composite part including at least one laminar reinforcing layer, characterized in that it comprises a semi-finished product that complies with the above description.

The objectives of the invention are also met using a molded and solidified part made from a composite material, including at least one preform that complies with the above description and that is impregnated by using at least one impregnation matrix of the resin prior to its solidification.

An advantage presented by a semi-finished product in accordance with the invention lies in the easy manipulation of the dry thermoplastic sheet during the draping operation of a preform.

Furthermore, the draping configuration of the preform is held in place by using a thermoplastic yarn whose fusion temperature is different than the thermoplastic layer fusion temperature.

The use of a thermoplastic yarn also makes it possible to prepare a semi-finished product or a preform, for the production of complex parts by using the thermoplastic welding technique to bind all the different parts or preforms. In this way a stiffening/shaping element for an external cover surface can be assembled.

Another advantage presented by a semi-finished product in accordance with the invention lies in the fact that there is no need of heat for binding or deep drawing the thermoplastic sheet on its support (e.g. reinforcing layers).

Another advantage obtained by the invention is that the fibre architecture can be controlled through, either the stitching yarn or the thermoplastic film/ sheet, with for example dedicted slits.

Another advantage of the invention is that the thermoplastic film/ sheet can enhance the drapeability of unstable (easily deformable) semi-finished products.

Another advantage presented by a semi-finished product in accordance with the invention lies in the fact that it is very easy to shape it into a particular shape. The thermoplastic layer is relatively stiff. However, the stitches made along a particular path or design through said thermoplastic layer and through at least one reinforcing layer enhance the drapeability of the semi-finished product. This can also be improved with the help of perforations and/or slits.

A better shaping is obtained due to the fact that there remains outside the stitching, large surfaces of contact between the different layers of the semi-finished product which can glide one over another. The preform quality is so improved.

Another advantage presented by a semi-finished product in accordance with the invention lies in its enhanced mechanical properties.

Another advantage presented by a semi-finished product in accordance with the invention lies in the fact that it can be stored at room temperature.

More details of the invention and its advantages shall appear in the following description, with a production example provided for use in reference with the figures found in the appendices:
- Figure 1, an exploded view of a laminar preform, produced in accordance with the invention, before its assembly,
- Figure 2, an exploded view of another example of a laminar preform, produced in accordance with the invention, during its assembly,
- and Figure 3, an exploded view of a further example of a laminar preform, produced in accordance with invention.

Elements that are structurally or functionally identical, present in several separate figures or illustrations are assigned a single numerical or alphanumerical reference.

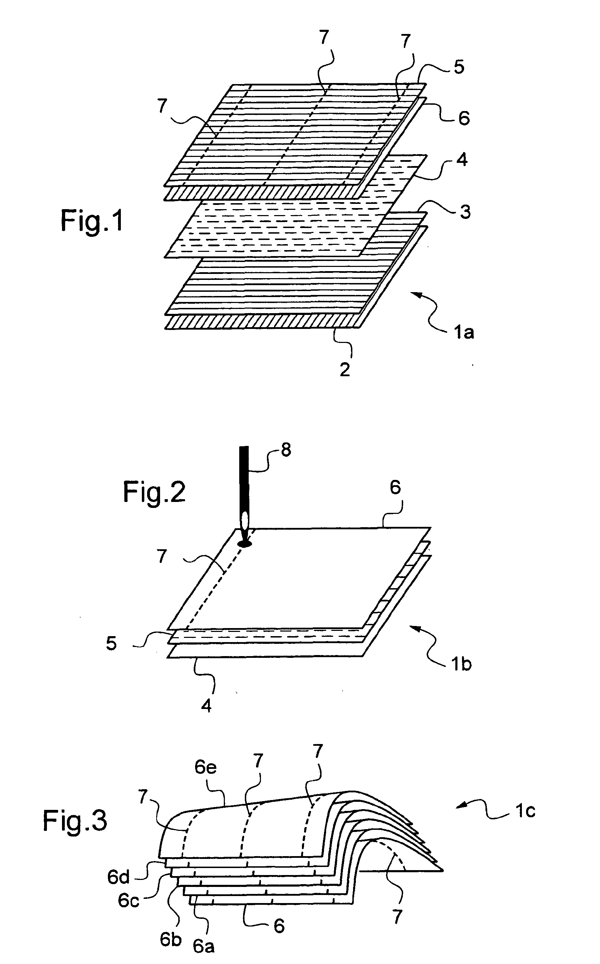

Figure 1 illustrates an example of semi-finished product or a preform 1 a produced in accordance with the invention. Semi-finished product or perform 1 a, represented in an exploded view, includes the assembly of reinforcing layers 2, 3, 4 and 5 and a thermoplastic layer 6 in the form of a thermoplastic sheet.

The thermoplastic layer 6 is favorably inserted between reinforcing layers 4 and 5 before being stitched on layer 5 using a yarn 7.

As a variant, thermoplastic layer 6, as well as reinforcing layers 4, 5 may be closely bound by a stitching operation. An assembly with more reinforcing layers 2, 3, 5, and 5 and/or thermoplastic layers 6 may also be envisaged to produce a preform in accordance with invention.

Corresponding perforations, not shown, are made in the layers that have been stitched together.

Figure 2 illustrates an example of another preform 1b produced in accordance with the invention. Preform 1b, represented in an exploded view, includes the assembly of reinforcing layers 4 and 5 and a thermoplastic layer 6 in the form of a thermoplastic sheet.

The thermoplastic layer 6 is positioned on an external side of preform 1b, to then be stitched along one 5 at least of the reinforcing layers 4 and 5 by using yarn 7.

A needle 8 from a stitching device not shown is used to produce the perforations required for the passage of a yarn 7. Such a stitching device is known and shall not be described in more detail.

Figure 3 illustrates an example of a part of preform 1 c, produced in accordance with the invention. The part of preform 1 c, represented in an exploded view, includes the assembly of thermoplastic layers 6, 6a, 6b, 6c, 6d and 6e. The example shown is an assembly of thermoplastic sheets bound together using a yarn 7. This assembly of thermoplastic sheets is designed to compose part of the draping of another part of a preform (not shown) or to compose a thermoplastic layer 6 presenting specific properties.

In an example of a preform produced in accordance with the invention, yarn 7 is composed of a thermoplastic material, with a fusion temperature that is greater than the fusion temperature of thermoplastic layer 6.

The fusion temperature of thermoplastic layer 6 is comprised between room temperature and 400°C, preferably between 80°C and 300°C, and the fusion temperature of the thermoplastic yarn 7 is comprised between 80°C and 400°C and preferably between 120°C and 250°C.

In another example of a preform in accordance with the invention, the thermoplastic layer 6 includes an assembly of several thermoplastic sheets stitched together.

As an example, one of the thermoplastic sheets has different structural characteristics and/or properties than the other thermoplastic sheets.

In an example of a preform in accordance with the invention, at least one of the materials of which the thermoplastic layer 6 is made, which provides the future molded part with its fire-resistance properties such as flame retardancy.

In an example of a preform in accordance with the invention, at least one of the materials of which the thermoplastic layer is made, which provides the future molded part with its required toughness level

Naturally, the present invention may be subjected to numerous variations as to its implementation. Although several implementations are described above, it will readily be understood that it is not conceivable to identify exhaustively all possible implementations. It is naturally possible to envisage replacing any of the means described or any of the steps described by equivalent means or equivalent steps without going beyond the scope of the present invention as defined by the claims.

## Claims

1. Semi-finished product (1a, 1b, 1c) for manufacturing a composite part including at least one dry laminar reinforcing layer (2,3,4,5), at least locally, as a minimum, one thermoplastic layer (6) and a
yarn (7) composed of a thermoplastic material for which the fusion temperature is greater than the fusion temperature of the thermoplastic layer (6),
**characterized in that** the at least one thermoplastic layer (6) is provided with perforations, wherein said at least one thermoplastic layer (6) with perforations is stitched on at least one reinforcing layer (2,3,4,5) with perforations using the yarn (7) passing through the perforations of said at least one thermoplastic layer (6) and through the perforations of said at least one reinforcing layer (2,3,4,5), said perforations being made prior to the stitching operation and the at least one thermoplastic layer (6) and the at least one reinforcing layer (2,3,4,5) having at least locally additional perforations and/or slits the fusion temperature of the thermoplastic layer (6) being between room temperature and 400°C, preferably between 80°C and 300°C and the fusion temperature of thermoplastic yarn (7) being between 80°C and 400°C, preferably between 120°C and 250°C.

2. Semi-finished product (1a, 1b, 1c) according to claim 1,
**characterized in that** the thermoplastic layer (6) comprises an assembly of several thermoplastic sheets/films stitched together.

3. Semi-finished product (1a, 1b, 1c) according to claim 2, **characterized in that** at least one of the thermoplastic sheets/films has different structural characteristics and/or properties than the other thermoplastic sheets/films.

4. Semi-finished product (1a, 1b, 1c) according to claim 1,
**characterized in that** the thermoplastic layer (6) is a non-woven layer such as a veil.

## Patentansprüche

1. Halbzeug (1a, 1b, 1c) zur Herstellung eines Teils aus Verbundmaterial mit mindestens einer trockenen, flächenförmigen Verstärkungsschicht (2, 3, 4, 5), mindestens stellenweise, als ein Minimum, einer thermoplastischen Schicht (6) und einem Garn (7) bestehend aus einem thermoplastischen Material, dessen Schmelztemperatur größer ist als die Schmelztemperatur der thermoplastischen Schicht (6),
**dadurch gekennzeichnet, dass** die mindestens eine thermoplastische Schicht (6) mit Perforierungen versehen ist, wobei die mindestens eine thermoplastische Schicht (6) mit Perforierungen auf mindestens eine Verstärkungsschicht (2, 3, 4, 5) mit Perforierungen genäht ist unter Verwendung des Garns (7), welches die Perforierungen der mindestens einen thermoplastischen Schicht (6) passiert sowie die Perforierungen der mindestens einen Verstärkungsschicht (2, 3, 4, 5), wobei die Perforierungen vor dem Nähvorgang erzeugt wurden, und die mindestens eine thermoplastische Schicht (6) und die mindestens eine Verstärkungsschicht (2, 3, 4, 5) mindestens stellenweise zusätzliche Perforierungen und/oder Schlitze aufweisen, wobei die Schmelztemperatur der thermoplastischen Schicht (6) zwischen Raumtemperatur und 400 °C liegt, vorzugsweise zwischen 80 °C und 300 °C, und die Schmelztemperatur des thermoplastischen Garns (7) zwischen 80 °C und 400 °C liegt, vorzugsweise zwischen 120 °C und 250 °C.

2. Halbzeug (1a, 1b, 1c) nach Anspruch 1,
**dadurch gekennzeichnet, dass** die thermoplastische Schicht (6) eine Anordnung einiger thermoplastischer Blätter/Filme aufweist, die zusammengenäht sind.

3. Halbzeug (1a, 1b, 1c) nach Anspruch 2,
**dadurch gekennzeichnet, dass** mindestens eines der thermoplastischen Blätter/Filme unterschiedliche Struktureigenschaften und/oder Eigenheiten als die anderen thermoplastischen Blätter/Filme aufweist.

4. Halbzeug (1a, 1b, 1c) nach Anspruch 1,
**dadurch gekennzeichnet, dass** die thermoplastische Schicht (6) eine nicht gewebte Schicht ist, wie zum Beispiel ein Schleier.

## Revendications

1. Un produit semi-fini (1a, 1b, 1c) pour la fabrication d'une pièce composite comprenant au moins une couche laminaire sèche de renforcement (2, 3, 4, 5), au moins localement, au minimum une couche thermoplastique (6) et un fil (7) composé d'un matériau thermoplastique dont la température de fusion est supérieure à la température de fusion de la couche thermoplastique (6),
**caractérisé en ce que** la au moins une couche thermoplastique (6) est pourvue de perforations, dans lequel ladite au moins une couche thermoplastique (6) pourvue de performations est cousue sur au moins une couche de renforcement (2, 3, 4, 5) pourvue de perforations en faisant passer le fil (7) dans les perforations de ladite au moins une couche thermoplastique (6) et dans les perforations de ladite au moins une couche de renforcement (2, 3, 4, 5), lesdites perforations étant réalisées préalablement à l'opération de couture et la au moins une couche thermoplastique (6) et la au moins une couche de renforcement (2, 3, 4, 5) étant au moins localement pourvues de fentes et/ou de perforations additionnelles, la température de fusion de la couche thermoplastique (7) étant comprise entre la température ambiante et 400 °C, de préférence entre 80 °C et 300 °C et la température de fusion du fil thermoplastique étant comprise entre 80 °C et 400 °C, de préférence entre 120 °C et 250 °C.

2. Un produit semi-fini (1a, 1b, 1c) selon la revendication 1,
**caractérisé en ce que** la couche thermoplastique (6) comprend un ensemble constitué de plusieurs feuilles/films thermoplastiques cousus ensemble

3. Un produit semi-fini (1a, 1b, 1c) selon la revendication 2,
**caractérisé en ce que** au moins un des feuilles/films thermoplastiques présente des caractéristiques et/ou des propriétés structurelles différentes de celles des autres feuilles/films thermoplastiques.

4. Un produit semi-fini (1a, 1b, 1c) selon la revendication 1,
**caractérisé en ce que** la couche thermoplastique (6) est une couche non tissée telle qu'un voile.
